**Europäisches Patentamt**

**European Patent Office**

**Office européen des brevets**

(19)

(11) Veröffentlichungsnummer: **0 033 112**
**A1**

# (12) EUROPÄISCHE PATENTANMELDUNG

(21) Anmeldenummer: **81100355.7**

(22) Anmeldetag: **19.01.81**

(51) Int. Cl.³: **F 01 L 3/14**
**B 23 P 15/00**

(30) Priorität: **23.01.80 DE 3002306**

(43) Veröffentlichungstag der Anmeldung:
**05.08.81 Patentblatt 81/31**

(84) Benannte Vertragsstaaten:
**AT BE CH FR GB IT LI NL SE**

(71) Anmelder: **Prüsse, Albert**
**Vechelde**
**D-3303 Mittelweg 2(DE)**

(72) Erfinder: **Prüsse, Albert**
**Vechelde**
**D-3303 Mittelweg 2(DE)**

(54) **Verfahren zur Erreichung des Vakuums und des Füllungsgrades bei Hohlventilen mit hochgradigem Vakuum.**

(57) Bei diesem Verfahren wird der Hohlraum des Hohlventiles (1) vollstaendig mit relativ hocherhitztem, sich in flüssigem Zustand befindlichem Hohlraumfüllungsmaterial (2) gefüllt, wobei Gase und Verunreinigungen aus der Ventilbohrung herausgespült werden. Anschließend wird das Hohlventil mit der Hohlraumöffnung gasdicht an einen Behaelter (4) geschlossen, der ebenfalls vollstaendig mit Hohlraumfüllungsmaterial, das ebenfalls relativ hoch erhitzt ist und sich in flüssigem Zustand befindet, geschlossen, um alsdann das Hohlraumfüllungsmaterial entsprechend dem gewünschten Füllungsgrad abzukühlen, wobei über einen Füllstandsmesser, Temperaturfühler, Frequenzmesser oder elektrischen Widerstandsmesser der jeweilige Füllungsgrad ermittelt wird und bei Erreichen des gewünschten Füllungsgrades ein Signal zum Schließen der Hohlraumöffnung gegeben wird. Das Hohlventil wird durch einen Verschlußstopfen (3), der mittels Kolbenstange (5), die hydraulisch, pneumatisch, mechanisch, elektrisch oder elektromagnetisch betaetigt werden kann, gasdicht verschlossen. Nach diesem Verfahren hergestellte Hohlventile zeichnen sich durch ein hochprozentiges Vakuum auch bei hohen Betriebstemperaturen aus.

./...

| 8 | Ventilaufnahmebuchse | Verfahren zur Erreichung | Datum | Gez.: |
|---|---|---|---|---|
| 7 | Druckventil | des Vakuums und des | 10.1.1981 | |
| 6 | Meßfühler | Füllungsgrades bei | | |
| 5 | Kolbenstange | Füllungsgrades bei | | |
| 4 | Behälter | Hohlventilen mit | | Blatt 1 |
| 3 | Verschlußstopfen | Hohlventilen mit | | |
| 2 | Hohlraumfüllung | hochgradigem Vakuum | | |
| 1 | Hohlventil | | | |

- 1 -

Verfahren zur Erreichung des Vakuums und des Füllungsgrades bei Hohlventilen mit hochgradigem Vakuum

----------------------------------------------------------

Anmelder:
Albert Prüße
3303 Vechelde, Mittelweg 2

----------------------------------------------------------

Die Erfindung betrifft Verfahren zur Erreichung des Vakuums und des Füllungsgrades bei Hohlventilen mit hochgradigem Vakuum und ist für thermisch hochbeanspruchte
Verbrennungsmotore interessant.

Bei thermisch hochbeanspruchten Verbrennungsmotoren ist
für eine günstige Waermeableitung vom Ventilkopf über
den Ventilschaft an den Zylinderkopf zu sorgen.

Zur Erfüllung dieser Erfordernisse werden heutzutage
vielfach zu etwa 60 Prozent mit Natrium gefüllte Hohlventile eingesetzt. Bei diesen Hohlventilen wurde die
Waermeableitung (Pendelkühlung), mittels Natrium, vom Ventilkopf zum Ventilschaft durch Verwirbelung der im Hohlraum eingeschlossenen Gase und Verunreinigungen, die den
Kontakt zwischen dem in der Ventilbohrung pendelndem Natrium und dem Ventilschaft verschlechtern, beeintraechtigt.

Der Erfindung liegt die Aufgabe zugrunde, den Waermetransport vom Ventilkopf zum Ventilschaft zu verbessern.

Diese Aufgabe wird erfindungsgemaeß dadurch gelöst, daß
der Hohlraum der Hohlventile frei von Gasen und Verunreinigungen gehalten wird, und somit der Waermetransport von
Ventilkopf zu Ventilschaft verbessert wird.

Die Herstellung entsprechender Hohlventile mit hochgradigem, bis zu 100-prozentigem, Vakuum erfolgt erfindungsgemaeß durch das nachstehend beschriebene und durch die
Zeichnung erlaeuterte Verfahren zur Erreichung des Vakuums
und des Füllungsgrades bei Hohlventilen mit hochgradigem
Vakuum.

Das Hohlraumfüllungsmaterial wird relativ hoch erhitzt
und in flüssigem Zustand in das Hohlventil gegeben, es füllt
die Ventilbohrung vollkommen aus und spült dabei den Hohlraum frei von Gasen und Verunreinigungen. Der Behaelter (4)
wird ebenfalls mit der entsprechenden Hohlraumfüllung zu
100 Prozent gefüllt, die ebenso hoch erhitzt sein kann und
sich in flüssigem Zustand befinden muß. Das Hohlventil wird
(lt. Zeichnung durch die Kraft F) gasdicht auf den Behaelter (4) geschlossen. Die Hohlraumfüllung wird entsprechend
dem gewünschten Füllungsgrad (0,6=60 Prozent Hohlraumfüllung) abgekühlt, die hierdurch bedingte Volumenminderung
der Hohlraumfüllung bewirkt das Vakuum im Ventil. Ein, am
Behaelter (4), in entsprechender Weise angebrachter Meßfühler (Füllstandsmesser-Füllstandsmessung mittels Röntgenstrahlen, Gammastrahlen, Ultraschallwellen usw., Temperaturfühler, elektrischer Messer, akustischer Messer etc.) ermittelt den Füllungsgrad des Hohlventiles und gibt das Signal zum Schließen des Ventiles,d.h. der Verschlußstopfen (3) wird über die Kolbenstange (5),die mechanisch,pneumatisch, hydraulisch,elektrisch usw. betaetigt werden kann,in den Hohlraum des Ventiles zwecks Abdichten getrieben.Die Masse der bei diesem Vorgang an den Behaelter (4) vom Ventil ab= gegebenen Hohlraumfüllung kann durch Erhitzen des Hohlraum= füllungsmaterials auf die ursprüngliche Temperatur über die Ventilaufnahmebuchse (8) und über das Druckventil (7) ent= weichen und gegebenenfalls wiederverwendet werden.Bei zu hohen Drücken,verursacht durch zu starkes Erhitzen des Hohlraumfüllungsmaterials nach Anschluß des Hohlventiles an den Behaelter (4),öffnet sich das Druckventil (7),(kann auch zur Entlüftung dienen) und laeßt entsprechend der zu starken Volumenausdehnung Füllungsmaterial entweichen.Bei diesem Verfahren sind die üblichen Vorsichts- und Schutz= maßnahmen,insbesondere bei der Handhabung von Natrium als Hohlraumfüllungsmaterial,zu beachten.Die beiliegende Zeich= nung dient nur zur Veranschaulichung und erhebt keinen An= spruch auf Maßstaeblichkeit.

Die mit der Erfindung erzielten Vorteile bestehen insbe= sondere darin,daß beim Füllen der Hohlventile mit Hohl= raumfüllungsmaterial die Gase und Verunreinigungen nahezu vollstaendig (bis zu 100 Prozent) aus der Ventilbohrung herausgespült werden und ein hochgradiges Vakuum,bis zu 100 Prozent,bei Einhaltung des gewünschten Füllungsgrades erzielt wird.

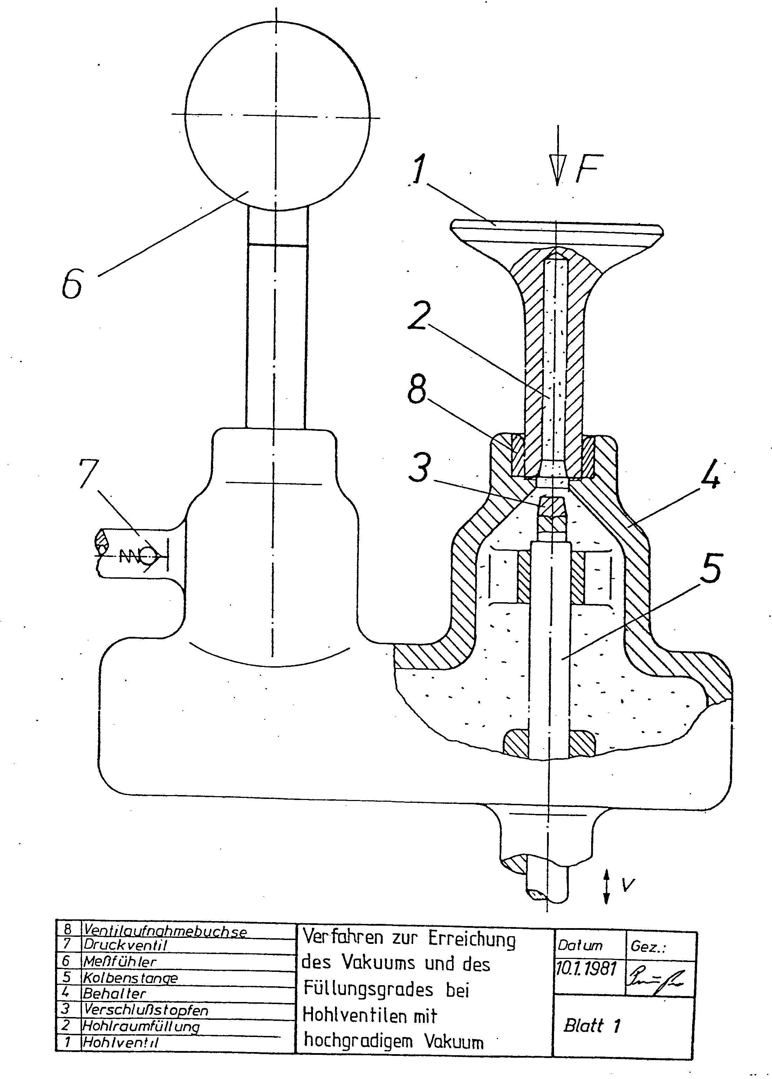

Patentansprüche:

1. Verfahren zur Erreichung des Vakuums und des Fül= lungsgrades bei Hohlventilen mit hochgradigem Vakuum dadurch gekennzeichnet,daß der Hohlraum des Hohlventi= les vollstaendig mit relativ hocherhitztem Hohlraum= füllungsmaterial,welches sich in flüssigem Zustand be= finden muß,gefüllt wird und hierbei im Hohlraum befind= liche Gase und Verunreinigungen herausgespült werden, um danach das Hohlventil mit der Hohlraumöffnung gas= dicht an einen Behaelter (4), der ebenfalls vollstaen= dig mit dem gleichen Hohlraumfüllungsmaterial,das sich ebenfalls in flüssigem Zustand befinden muß und ebenso hoch erhitzt sein kann,anzuschließen,um alsdann das Hohlraumfüllungsmaterial entsprechend dem gewünschten Füllungsgrad abzukühlen,wobei ein Füllstandsmesser den Füllstand des Hohlraummaterials im Hohlventil erfaßt und bei Erreichen des gewünschten Füllungsgrades bzw. Füllstandes ein Signal zum Schließen der Hohlraumöff= nung des Hohlventiles gibt,woraufhin die Hohlraumöff= nung geschlossen wird.

2. Verfahren gemaeß Anspruch 1,jedoch ohne Füllstands= messer,dadurch gekennzeichnet,daß ein Temperaturfühler die Temperatur des Hohlraumfüllungsmaterials im Behael= ter (4) bei Anschluß des Hohlventiles an den Behaelter (4) mißt und von einem bestimmten Temperaturabfall,der abhaengig von dem gewünschten Füllungsgrad ist,das Sig= nal zum Schließen der Hohlraumöffnung des Hohlventiles gibt.

3. Verfahren gemaeß Anspruch 1,jedoch ohne Füllstands= messer,dadurch gekennzeichnet,daß das Hohlventil nach Anschluß an den Behaelter (4) erregt wird,das heißt mit einem Gegenstand angeschlagen wird,um die Eigen= schwingungen,die Aufschluß über den jeweiligen Füllungs= grad des Hohlventiles geben,mittels eines Frequenzmes= sers zu messen,der bei den Eigenfrequenzen,die dem Hohl= ventil mit dem gewünschten Füllungsgrad entsprechen,ein Signal zum Schließen der Hohlraumöffnung des Hohlven= tiles gibt.

4. Verfahren gemaeß Anspruch 1,jedoch ohne Füllstands= messer,dadurch gekennzeichnet,daß ein elektrischer Wi= derstandsmesser,der in geeigneter Weise an das Hohlven= til angeschlossen wird,den Widerstand des Hohlventiles mißt und bei Erreichen eines Widerstandswertes,der durch den gewünschten Füllungsgrad des Hohlventiles bedingt ist,ein Signal zum Schließen der Hohlraumöff= nung des Hohlventiles gibt.

5. Verfahren 1 bis 4 dadurch gekennzeichnet,daß die Hohlraumöffnung des Hohlventiles durch einen Verschluß= stopfen im Behaelter (4) gasdicht verschlossen wird.

6. Verfahren 5 dadurch gekennzeichnet,daß der Verschluß= stopfen mittels einer Kolbenstange,auf die er fixiert wurde und die hydraulisch,pneumatisch,mechanisch,elek= trisch oder elektromagnetisch betaetigt werden kann,in die Hohlraumöffnung des Hohlventiles getrieben wird.

- 4 -

7. Verfahren 1 bis 6 dadurch gekennzeichnet, daß am Behaelter (4) an geeigneter Stelle ein Entlüftungsventil
angebracht ist.

8. Verfahren 1 bis 7 dadurch gekennzeichnet, daß am
Behaelter (4) an geeigneter Stelle ein Überdruckventil
angebracht ist.

9. Verfahren 1 bis 8 dadurch gekennzeichnet, daß mehrere
Hohlventile am Behaelter (4) angeschlossen werden.

10. Hohlventile dadurch gekennzeichnet, daß der Hohlraum der Hohlventile ein hochgradiges, bis 100-prozenti=
ges, Vakuum bei hohen Betriebstemperaturen aufweist.

0033112

1|1

F

V

| | | |
|---|---|---|
| 8 | Ventilaufnahmebuchse | |
| 7 | Druckventil | |
| 6 | Meßfühler | |
| 5 | Kolbenstange | |
| 4 | Behälter | |
| 3 | Verschlußstopfen | |
| 2 | Hohlraumfüllung | |
| 1 | Hohlventil | |

Verfahren zur Erreichung des Vakuums und des Füllungsgrades bei Hohlventilen mit hochgradigem Vakuum

| Datum | Gez.: |
|---|---|
| 10.1.1981 | |
| Blatt 1 | |

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 369 063 (THOMPSON) | 1,5 |
| | * Seite 1, linke Spalte, Zeilen 1-24; rechte Spalte, Zeile 44 bis Seite 2, rechte Spalte, Zeile 67; Figuren 1,2 * | |
| | -- | |
| | GB - A - 380 571 (ASPLEY) | 1 |
| | * Seite 2, Zeilen 35-42; Seite 3, Zeilen 4-95; Figuren 1,2 * | |
| | -- | |
| | FR - A - 896 895 (RENAULT) | 1 |
| | * Seite 2, Zeilen 55-95 * | |
| | -- | |
| | DE - C - 885 787 (SCHIEMANN) | 1 |
| | * Seite 2, Zeilen 1-59; Figur * | |
| | -- | |
| | FR - A - 997 316 (DERVAUX) | 1 |
| | * Seite 1, rechte Spalte, Absatz 4 bis Seite 2, linke Spalte, Absatz 2 * | |
| | -- | |
| | GB - A - 880 664 (MEISSNER) | 4 |
| | * Seite 1, Zeilen 13-20; Zeile 55 bis Seite 2, Zeile 8; Zeile 117 bis Seite 3, Zeile 5; Figur 3 * | |
| | -------- | |

**KLASSIFIKATION DER ANMELDUNG (Int. Cl.³)**

F 01 L   3/14
B 23 P 15/00

**RECHERCHIERTE SACHGEBIETE (Int. Cl.³)**

F 01 L
F 16 K
B 23 P
B 65 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 6. April 1981 | KOOIJMAN |

EPA form 1503.1   06.78